Europäisches Patentamt

European Patent Office

Office européen des brevets

(11) Veröffentlichungsnummer: **0 392 191**

**A1**

(12) **EUROPÄISCHE PATENTANMELDUNG**

(21) Anmeldenummer: **90104516.1**

(22) Anmeldetag: **09.03.90**

(51) Int. Cl.5: **F24H 9/20, G05D 23/24**

(30) Priorität: **14.04.89 DE 8904733 U**

(43) Veröffentlichungstag der Anmeldung:
**17.10.90 Patentblatt 90/42**

(84) Benannte Vertragsstaaten:
**AT BE CH DE ES FR GB IT LI NL SE**

(71) Anmelder: **Steinel GmbH & Co. KG**
**Dieselstrasse 80-86**
**D-4836 Herzebrock(DE)**

(72) Erfinder: **Steinel, Heinrich W.**
**Obere Mühlstrasse 10a**
**D-Bad Wörishofen(DE)**

(74) Vertreter: **Patentanwälte Grünecker,**
**Kinkeldey, Stockmair & Partner**
**Maximilianstrasse 58**
**D-8000 München 22(DE)**

(54) **Heissluftpistole.**

(57) Die vorliegende Erfindung betrifft eine Heißluftpistole mit einem Gebläse und mit wenigstens einem Heizwiderstand (1, 2), der über eine Einstelleinrichtung (7) und einen elektrischen Steuerkreis (12) in seiner Leistungsaufnahme steuerbar ist, ausgezeichnet durch einen im Heißluftkanal angeordneten Temperatursensor (6) und eine mit dem Temperatursensor (6) verbundene Temperaturanzeigeeinrichtung (9).

## Heißluftpistole

Die Erfindung betrifft eine Heißluftpistole mit einem Gebläse und mit wenigstens einem Heizwiderstand, der über eine Einstelleinrichtung und einen elektrischen Steuerkreis in seiner Leistungsaufnahme steuerbar ist.

Heißluftpistolen werden für die verschiedenartigsten Materialbearbeitungen verwendet. Zum Einstellen der Arbeitstemperatur ist üblicherweise ein Potentiometer vorgesehen, über das die Leistungsaufnahme des Heizwiderstandes einstellbar ist. Für die Bearbeitung von bestimmten Materialien, wie z.B. Thermoplasten, ist es erforderlich, die Arbeitstemperatur relativ genau einzustellen, da der Thermoplast sonst entweder nicht ausreichend schmilzt oder aber bereits Schaden nimmt.

Der vorliegenden Erfindung liegt die Aufgabe zugrunde, eine Heißluftpistole anzugeben, mit der eine genauere Temperatureinstellung ermöglicht wird.

Diese Aufgabe wird ausgehend vom Oberbegriff des Anspruchs 1 mit dessen kennzeichnenden Merkmalen gelöst.

Durch den Temperatursensor und die Temperaturanzeigeeinrichtung läßt sich die gewüsnchte Temperatur relativ genau auf den gewünschten Wert einstellen.

Die bevorzugte Ausführungsform nach Anspruch 2 hat den Vorteil, daß mit der Differenzbildung des Temperatur- Ist-Werts von dem Temperatur-Soll-Wert eine Temperaturregelung durchführbar ist, die den Temperatur-Ist-Wert auf den eingestellten Temperatur-Soll-Wert regelt, unabhängig davon, ob die Luftzufuhr bzw. die Heißluftabgabe aufgrund ungünstiger Arbeitsbedingungen beeinträchtigt ist.

Die bevorzugte Ausführungsform nach Anspruch 3 hat den Vorteil, daß sich das Leuchtdiodenband und die dazugehörige Temperaturskala einfach herstellen und in günstiger Weise in die Gehäuseform integrieren lassen.

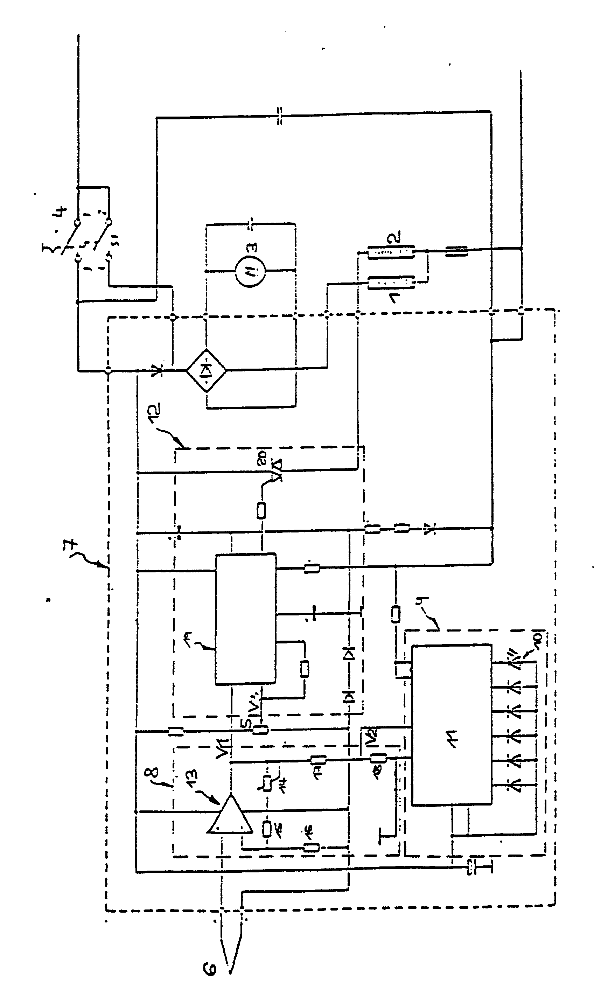

Im folgenden wird ein bevorzugtes Ausführungsbeispiel der Erfindung anhand der Zeichnung erläutert, die einen elektrischen Schaltkreis einer Heißluftpistole zeigt.

Die Heißluftpistole enthält zwei Heizwiderstände 1, 2, einen Gebläsemotor 3, einen zweistufigen Schalter 4, ein Potentiometer 5 für den Temperatur-Soll-Wert, ein Thermoelement 6 als Temperatursensor, sowie eine Schaltungsanordnung 7, im wesentlichen bestehend aus einem Meßverstärker 8, einer Temperaturanzeigeeinrichtung 9 mit einem Leuchtdiodenband 10, dessen Katodenanschlüsse mit einer Anzeigesteuerung 11 verbunden sind, und einem Steuerkreis 12, der die Leistungsaufnahme des Heizwiderstandes 2 steuert.

Der dem Thermoelement 6 nachgeschaltete Meßverstärker 8 ist als Spannungsverstärker 13 ausgebildet, dessen Verstärkung mit dem Widerstand 14 des Spannungsteilers 14, 15, 16 einstellbar ist. Das dadurch erhaltene, verstärkte Sensorsignal V1 wird über einen zweiten Spannungsteiler 17, 18 auf einen Signalwert V2 entsprechend den Eingangsparametern der Temperaturanzeigeeinrichtung 9 verringert und als Eingangswert der Anzeigesteuerung 11 zugeführt, wobei die Anzeigesteuerung 11 für jede Leuchtdiode des Leuchtdiodenbandes 10 einen Komparator vorsieht, der eingangsseitig mit dem Eingangswert und einem Schwellenwert beschaltet ist, und dessen Ausgang mit einer Leuchtdiode des Leuchtdiodenbandes 10 verbunden ist, die entsprechend einer Temperaturskala einen bestimmten Temperaturwert anzeigt. Die Schwellenwerte der einzelnen Komparatoren sind derartig gewählt, daß der Komparator für den kleinsten Temperaturwert den kleinsten Schwellenwert und der Komparator für den größten Temperaturwert den größten Schwellenwert aufweist, wobei die dazwischenliegenden Schwellenwerte sich von ihrem vorhergehenden um einen bestimmten Differenzwert unterscheiden, so daß mit steigenden bzw. fallenden Eingangswert die Anzahl der emittierenden Leuchtdioden steigt bzw. fällt. Über den Schleifkontakt des Potentiometers 5 wird ein Referenzwert V3 für den Temperatur-Soll-Wert abgegriffen und einem in einem Triac-Ansteuerkreis 19 enthaltenen Differenzverstärker zugeführt, der den Referenzwert V3 mit dem verstärkten Sensorwert V1, der ebenfalls dem Differenzverstärker zugeführt wird, vergleicht, wobei in Abhängigkeit vom Ausgangswert des Differenzverstärkers die Leistungsaufnahme des Heizwiderstandes 2 über den Triac 20 des Steuerkreises 12 gesteuert wird.

Bei der Inbetriebnahme der Heißluftpistole wird der Schalter 4 entsprechend der gewünschten Gebläsestufe auf die erste oder zweite Stufe geschaltet, und im Anschluß daran mit dem Potentiometer 5 die Temperatur auf den gewünschten Temperatur-Soll-Wert eingestellt. Der sich einstellende Temperatur-Ist-Wert wird von dem Leuchtdiodenband 10 angezeigt. Dabei erfolgt die Temperatureinstellung wie folgt:

Zu Beginn wird der verstärkte Signalwert V1 des Temperatursensors mit dem vom Potentiometer eingestellten Referenzwert V3 verglichen und in Abhängigkeit davon der Heizwiderstand 2 über die vom Triac 20 gesteuerte Leistungszufuhr geheizt, während gleichzeitig der Temperatur-Ist-Wert über das Thermoelement 6 erfaßt und in eine entsprechende elektrische Spannung umgeformt wird, die über den nachgeschalteten Meßverstärker 8 in zwei Signalwerte V1 und V2 verstärkt wird. Der Signalwert V2 wird der Anzeigesteuerung 11 zugeführt, die entsprechend dem Signalwert V2 die tatsächliche Heißlufttemperatur über das Leuchtdiodenband 10 mit der dazugehörigen Temperaturskala anzeigt, während der Signalwert V1 dem Steuerkreis 12 zugeführt wird, der in Abhängigkeit vom Signalwert V1 und V3 die Heißlufttemperatur regelt.

**Ansprüche**

1. Heißluftpistole mit einem Gebläse und mit wenigstens einem Heizwiderstand, der über eine Einstelleinrichtung und einen elektrischen Steuerkreis in seiner Leistungsaufnahme steuerbar ist, **gekennzeichnet durch** einen im Heißluftkanal angeordneten Temperatursensor (6) und eine mit dem Temperatursensor verbundene Temperaturanzeigeeinrichtung (9).

2. Heißluftpistole nach Anspruch 1, **gekennzeichnet durch** einen Differenzverstärker (19), dem eingangsseitig der vom Temperatursensor (6) abgeleitete Temperatur-Ist-Wert (V1) und der von der Einstelleinrichtung (5) abgeleitete Temperatur-Soll-Wert (V3) zugeführt ist, dessen Ausgangssignal die Leistungsaufnahme des Heizwiderstandes (2) bestimmt.

3. Heißluftpistole nach Anspruch 1 oder 2, **dadurch gekennzeichnet,** daß die Temperaturanzeigeeinrichtung (9) als ein mit einer Temperaturskala versehenes Leuchtdiodenband (10) ausgebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | WO-A-8 403 552 (SKILTEN ELECTRONICS LTD)<br>* Zusammenfassung *<br>--- | 1 | F 24 H 9/20<br>G 05 D 23/24 |
| Y | US-A-4 682 010 (DRAPEAU)<br>* Spalte 5, Zeilen 56-68 *<br>--- | 1 | |
| A | PATENT ABSTRACTS OF JAPAN, Band 10, Nr. 116 (P-452)[2173], 30. April 1986; & JP-A-60 246 414 (MATSUI SEISAKUSHO K.K.) 06-12-1985<br>--- | 1 | |
| A | PATENT ABSTRACTS OF JAPAN, vol. 9, no. 261 (M-422)[1984], 18. Oktober 1985; & JP-A-60 108 637 (SHARP K.K.) 14-06-1985<br>----- | 1,3 | |

RECHERCHIERTE SACHGEBIETE (Int. Cl.5)

F 24 H
G 05 D

Der vorliegende Recherchenbericht wurde für alle Patentansprüche erstellt

| Recherchenort | Abschlußdatum der Recherche | Prüfer |
|---|---|---|
| DEN HAAG | 04-07-1990 | VAN GESTEL H.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument